# EUROPEAN PATENT APPLICATION

(11) **EP 4 848 354 A1**
(43) Date of publication of application: **02.12.2026**
(21) Application number: 26182065.8
(22) Date of filing: 29.05.2026
(51) Int. Cl.: H01M 4/134, H01M 4/36, H01M 4/38, H01M 4/133, H01M 4/583, H01M 4/587, H01M 4/1393, H01M 4/1395, H01M 4/02

(54) **ANODE FOR LITHIUM SECONDARY BATTERY AND LITHIUM SECONDARY BATTERY INCLUDING THE SAME**

(30) Priority: 30.05.2025 KR 20250071492
(71) Applicant: SK innovation Co., Ltd., Seoul 03188 (KR); SK On Co., Ltd., Seoul 03161 (KR)
(72) Inventor: KIM, Hyo Mi, 34124 Daejeon (KR); PARK, Gwi Ok, 34124 Daejeon (KR); BANG, Sang In, 34124 Daejeon (KR); LEE, Jeong Woo, 34124 Daejeon (KR); CHOI, Wan Uk, 34124 Daejeon (KR); CHOI, Je Nam, 34124 Daejeon (KR)
(74) Representative: Stolmár & Partner Patentanwälte PartG mbB

(57) **Abstract**

An anode for a lithium secondary battery includes an anode current collector, and an anode active material layer disposed on at least one surface of the anode current collector and including an anode active material. An electrode peak intensity ratio defined by Ip1/Ip2 of the anode active material layer is in a range from 0.6 to 1.0. Ip1 is a maximum height of a peak in a range of 2.0 Å to 2.7 Å in a pair distribution function (PDF) spectrum obtained by a PDF analysis for the anode active material layer, and Ip2 is a maximum height of a peak in a range of 3.4 Å to 4.1 Å in the PDF spectrum.

## Description

### CROSS-REFERENCE TO RELATED APPLICATION

This application claims priority to Korean Patent Application No. 10-2025-0071492 filed on May 30, 2025, the entire disclosure of which is incorporated by reference herein.

### BACKGROUND

### 1. Field

Embodiments of the present disclosure relates to an anode for a lithium secondary battery and a lithium secondary battery including the same.

### 2. Descriptions of the Related Art

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as a power source of an eco-friendly vehicle such as an electric vehicle.

Examples of the secondary battery include a lithium secondary battery, a nickelcadmium battery, a nickel-hydrogen battery, etc. The lithium secondary battery among the secondary batteries is being actively developed due to high operational voltage and energy density per unit weight, a high charging rate, a compact dimension, etc.

Recently, as an application of the lithium secondary battery is expanded, an anode including silicon is being developed to increase a capacity. For example, a composite of silicon and carbon, silicon oxide, or the like, may be included in the anode. However, volume expansion of the anode may be increased due to high volume expansion ratio of silicon to degrade life-span properties during repeated charging and discharging.

### SUMMARY

According to an aspect of the present disclosure, there is provided an anode for a lithium secondary battery having improved electrical properties and life-span properties.

According to an aspect of the present disclosure, there is provided a lithium secondary battery having improved electrical properties and life-span properties.

An anode for a lithium secondary battery according to embodiments of the present disclosure includes an anode current collector, and an anode active material layer disposed on at least one surface of the anode current collector and including an anode active material. An electrode peak intensity ratio (I₁) defined by Equation 1 of the anode active material layer is in a range from 0.6 to 1.0. [Equation 1] $electrode peak intensity ratio \left({I}_{1}\right) = Ip 1 / Ip 2$

In Equation 1, Ip1 is a maximum height of a peak in a range of 2.0 Å to 2.7 Å in a pair distribution function (PDF) spectrum obtained by a PDF analysis for the anode active material layer, and Ip2 is a maximum height of a peak in a range of 3.4 Å to 4.1 Å in the PDF spectrum.

In some embodiments, an electrode peak intensity ratio (I₂) defined by Equation 2 of the anode active material layer may be in a range from 1.0 to 1.5. [Equation 2] $electrode peak intensity ratio \left({I}_{2}\right) = Ip 2 / Ip 3$

In Equation 2, Ip2 is a maximum height of a peak in a range of 3.4 Å to 4.1 Å in the pair distribution function (PDF) spectrum obtained by the PDF analysis for the anode active material layer, and Ip3 is a maximum height of a peak in a range of 4.1 Å to 4.9 Å in the PDF spectrum.

In some embodiments, the anode active material layer may include a first anode active material layer and a second anode active material layer on the first anode active material layer.

In some embodiments, a first orientation index according to Equation 3 of the first anode active material layer and a second orientation index according to Equation 4 of the second anode active material layer may be different from each other. [Equation 3] $first orientation index \left(O.{I}_{\left(1\right)}\right) = I \left(004\right) / I \left(110\right)$

In Equation 3, I(004) is a peak intensity of a (004) plane peak of the first anode active material layer measured by an X-ray diffraction (XRD) analysis, and I(110) is a peak intensity of a (110) plane of the first anode active material layer measured by the XRD analysis. [Equation 4] $second orientation index \left(O.{I}_{2}\right) = I \left(004\right) / I \left(110\right)$
in Equation 4, I(004) is a peak intensity of a (004) plane peak of the second anode active material layer measured by the XRD analysis, and I(110) is a peak intensity of a (110) plane peak of the second anode active material layer measured by the XRD analysis.

In some embodiments, the first orientation index may be smaller than the second orientation index.

In some embodiments, the first orientation index may be 1.5 or more and 1.8 or less, and the second orientation index may be greater than 1.5 and 2.2 or less.

In some embodiments, the first orientation index may be greater than the second orientation index.

In some embodiments, the first orientation index may be 1.9 or more and 2.6 or less, and the second orientation index may be 1.5 or more and less than 2.5.

In some embodiments, the anode active material layer may include a first anode active material layer including a first carbon-based active material, and a second anode active material layer including a second carbon-based active material and a first silicon-based active material on the first anode active material layer.

In some embodiments, the first silicon-based active material may include a carbon-silicon composite.

In some embodiments, a content of the first silicon-based active material may be in a range from 5 wt% to 20 wt% based on a total weight of the second anode active material layer.

In some embodiments, the first anode active material layer may further include a second silicon-based active material including a silicon oxide.

In some embodiments, a content of the second silicon-based active material may be in a range from 0.5 wt% to 8 wt% based on a total weight of the first anode active material layer.

In some embodiments, each of the first carbon-based active material and the second carbon-based active material may include artificial graphite.

In some embodiments, the second anode active material layer may further include a conductive material including a single-walled carbon nanotube (SWCNT).

In some embodiments, the electrode peak intensity ratio (I₁) may be in a range from 0.65 to 1.0.

In some embodiments, the anode active material may include a composite particle that may include a carbon-based particle including pores and a silicon-containing layer on the carbon-based particle.

In some embodiments, the composite particle may further include a carbon layer on the silicon-containing layer.

A lithium secondary battery according to embodiments of the present disclosure includes the above-described anode for a lithium secondary battery, and a cathode opposing the anode.

### BRIEF DESCRIPTION OF THE DRAWINGS

FIG. 1 is a schematic cross-sectional view illustrating an anode for a lithium secondary battery according to example embodiments.
FIG. 2 and FIG. 3 are a schematic cross-sectional view and a plan view, respectively, of a lithium secondary battery according to example embodiments.
FIG. 4 is a pair distribution function (PDF) spectrum graph obtained by a PDF analysis of Example 1.

### DETAILED DESCRIPTION OF THE EMBODIMENTS

Embodiments of the present disclosure provide an anode for a lithium secondary battery (hereinafter, that may be abbreviated as an "anode ") including anode active material layers. Additionally, a lithium secondary battery (hereinafter, that may be abbreviated as a "secondary battery") including the anode is provided.

The term "carbon-based active material" herein may refer to an active material containing a carbon element and does not include a silicon element. The term "silicon-based active material" herein may refer to an active material containing a silicon element.

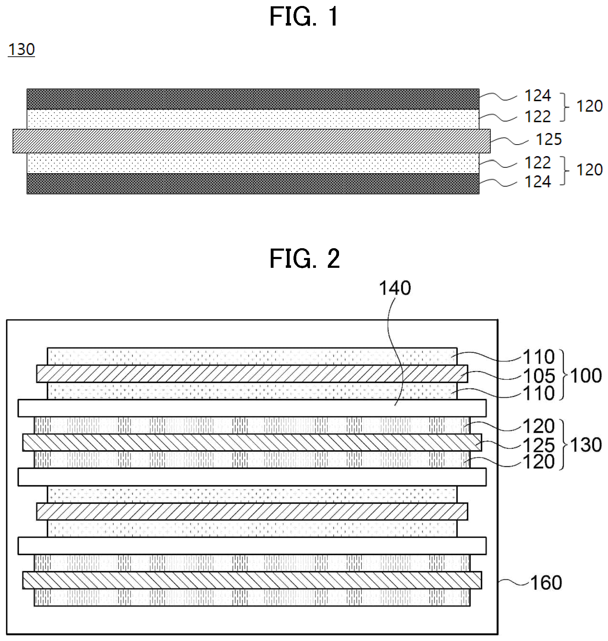

FIG. 1 is a schematic cross-sectional view illustrating an anode according to example embodiments.

Referring to FIG. 1, an anode 130 includes an anode active material layer 120 formed on an anode current collector 125. The anode active material layer 120 may include a first anode active material layer 122 formed on the anode current collector 125 and a second anode active material layer 124 formed on the first anode active material layer 122.

For example, the anode current collector 125 may include a copper foil, a nickel foil, a stainless steel foil, a titanium foil, a nickel foam, a copper foam, a polymer substrate coated with a conductive metal, or the like. These may be used alone or in combination of two or more therefrom. For example, a thickness of the anode current collector may be 5 µm to 50 µm.

Each of the first cathode active material layer 122 and the second cathode active material layer 124 may include an anode active material. A material capable of intercalating and de-intercalating lithium ions may be used as the anode active material. For example, the anode active material may include a carbon-based material such as a crystalline carbon, an amorphous carbon, a carbon composite, a carbon fiber, etc.; a lithium metal; a lithium alloy; a silicon (Si)-containing material; a tin (Sn)-containing material; or the like.

Examples of the amorphous carbon may include hard carbon, soft carbon, coke, a mesocarbon microbead (MCMB), a mesophase pitch-based carbon fiber (MPCF), etc.

Examples of the crystalline carbon may include a graphite-based carbon such as natural graphite, artificial graphite, a graphitized coke, a graphitized MCMB, a graphitized MPCF, or the like.

The lithium metal may include a pure lithium metal or a lithium metal having a protective layer for suppressing dendrite growth. In an embodiment, a lithium metal-containing layer deposited or coated on the anode current collector may be used as the anode active material layer. In an embodiment, a lithium thin film may be used as the anode active material layer.

Elements included in the lithium alloy may include aluminum, zinc, bismuth, cadmium, antimony, silicon, lead, tin, gallium, indium, or the like.

The silicon-containing material may include Si, SiOx (0<x<2), a carbon-silicon composite, a metal-doped silicate, SiOx (0<x<2), or the like. The metal may include lithium and/or magnesium.

In example embodiments, the anode active material may include the carbon-based active material, or may include the carbon-based active material and the silicon-based active material.

In example embodiments, the first anode active material layer 122 may include a first carbon-based active material. For example, the first carbon-based active material may include the aforementioned carbon-based material.

In example embodiments, the second anode active material layer 124 may include a second carbon-based active material and a first silicon-based active material. For example, the second carbon-based active material may include the carbon-based material, and the first silicon-based active material may include the silicon-containing material.

In example embodiments, each of the first carbon-based active material and the second carbon-based active material may include a crystalline carbon.

In example embodiments, each of the first carbon-based active material and the second carbon-based active material may include artificial graphite. Artificial graphite may be employed, so that chemical stability and mechanical stability of the anode may be entirely improved. Further, an orientation index of each of the first anode active material layer 122 and the second anode active material layer 124 may be controlled.

In example embodiments, artificial graphite may include a single-type artificial graphite particles or a granulated artificial graphite particle.

The single-type artificial graphite particle and the granulated artificial graphite particle may be classified based on a particle shape.

The granulated artificial graphite particle may have a form in which two or more sub-particles (primary particles) are substantially aggregated into one independent particle. For example, the granulated artificial graphite particle may be a secondary particle in which a plurality of the primary particles are aggregated. For example, the granulated artificial graphite particle may include 10 or more, 15 or more, or 20 or more of the sub-particles or the primary particles therein.

The single-type artificial graphite particle may have one single particle form. For example, the single-type artificial graphite particle may have a single body form that is not an aggregate of sub-particles or primary particles. For example, aggregates or assemblies of multiple sub-particles (e.g., 10 or more) may be excluded from the single-type artificial graphite particle.

However, a monolithic artificial graphite particle in which the single-type artificial graphite particles are adjacent to each other in a pressing process for forming the anode, and some adjacent single-type artificial graphite particles (e.g., less than 10, less than 5, etc.) are adjacent and attached to each other may not be excluded from the single-type artificial graphite particle.

In example embodiments, the second carbon-based active material may include the single-type artificial graphite particle, and thus may be uniformly mixed with the first silicon-based active material in the second anode active material layer 124 and rapid charging properties of the secondary battery may be improved.

In example embodiments, an average particle diameter (D50) of the second carbon-based active material may be in a range from 1 µm to 15 µm, from 3 µm to 13 µm, or from 5 µm to 10 µm. In the above range, stability of the second anode active material layer 124 may be further improved.

In example embodiments, the first carbon-based active material may include the granulated artificial graphite particles. Accordingly, pressing properties of the first anode active material layer 122 may be improved and mechanical stability may be increased. Additionally, crack generation may be reduced, and life-span properties of the secondary battery may be improved.

In example embodiments, an average particle diameter (D50) of the first carbon-based active material may be in a range from 5 µm to 30 µm, from 8 µm to 25 µm, or from 5 µm to 20 µm. In the above range, stability of the first anode active material layer 122 may be improved.

The average particle diameter (D50) may refer to a volume average particle diameter. For example, the average particle diameter (D50) may refer to a particle diameter at a volume fraction of 50% in a particle size distribution obtained by accumulation from the smallest particle size using a particle size analyzer by a laser diffraction method.

In example embodiments, a content of the first carbon-based active material may be 80 wt% or more, e.g., from 80 wt% to 99 wt%, from 85 wt% to 98 wt%, or from 90 wt% to 96 wt% based on a total weight of the first anode active material layer 122. In the above range, spatial efficiency of the anode active material may be increased while maintaining a first orientation index of the first anode active material layer 122 described later in a predetermined range, thereby improving energy density of the secondary battery.

In example embodiments, a content of the second carbon-based active material may be in a range from 70 wt% to 98 wt%, from 72 wt% to 95 wt%, from 75 wt% to 90 wt%, or from 78 wt% to 86 wt% based on a total weight of the second anode active material layer 124.

In some embodiments, the content of the second carbon-based active material may be determined in consideration of the content of the first silicon-based active material. For example, the content of the second carbon-based active material and the first silicon-based active material may be in a range from 85 wt% to 98 wt% based on the total weight of the second anode active material layer 124.

In example embodiments, the anode active material may include composite particles which may include carbon-based particles including pores and a silicon-containing layer on the carbon-based particles.

In example embodiments, the first silicon-based active material may include a carbon-silicon composite. Accordingly, an electrode peak intensity ratio and a second orientation index of the second anode active material layer 124 described later may be adjusted.

For example, the carbon-silicon composite may include a silicon-based particle and a carbon-containing coating on the silicon-based particle. Alternatively, the carbon-silicon composite may include a carbon-based particle and a silicon-containing coating on the carbon-based particle.

In example embodiments, the first silicon-based active material may include the carbon-silicon composite including the carbon-based particle and the silicon-containing coating on a surface of the carbon-based particle. Accordingly, a difference in expansion ratios between active materials may be reduced, and gas generation in the second anode active material layer 124 may be suppressed and cracks may be prevented.

In example embodiments, the carbon-based particle may contain pores. For example, the carbon-based particles may be porous particles including a plurality of pores. Accordingly, volume expansion of silicon may be alleviated by the pores of the carbon-based particles, so that stability of the second anode active material layer 124 may be further improved.

For example, the carbon-based particle may include an activated carbon, a carbon nanotube, a carbon nanowire, graphene, a carbon fiber, carbon black, graphite, a porous carbon, a pyrolyzed cryogel, a pyrolyzed xerogel, a pyrolyzed aerogel, etc. These may be used alone or in a combination of two or more therefrom.

In some embodiments, the carbon-based particle may include an amorphous structure or a crystalline structure.

In an embodiment, the carbon-based particle may contain an amorphous structure. In this case, crystallinity of the second carbon-based active material of the second anode active material layer 124 may be adjusted, and the second orientation index of the second anode active material layer 124 may be adjusted within a predetermined range.

The term "surface of carbon-based particle" used herein may refer to an outer surface of the carbon-based particle and an inner surface of the pores included in the carbon-based particle.

For example, the silicon-containing coating may be formed on at least a portion of the outer surface of the carbon-based particle. For example, the silicon-containing coating may be formed on at least a portion of the inner surface of the pores of the carbon-based particle.

In some embodiments, the silicon-containing coating may include amorphous silicon. Accordingly, stability of the second cathode active material layer 124 may be further improved.

In example embodiments, the carbon-silicon composite or the composite particle may further include a carbon layer on the silicon-containing layer. Accordingly, contact between silicon and water of the anode active material may be prevented, and decrease in discharge capacity and capacity efficiency of the secondary battery may be suppressed after preparing the anode active material and before forming the anode.

In example embodiments, the carbon layer may be formed on a portion of the surface of the carbon-based particle on which the silicon-containing layer is not formed. For example, the carbon layer may entirely cover the carbon-based particle and the silicon-containing layer. Accordingly, mechanical stability and chemical stability of the anode active material may be improved.

In example embodiments, the carbon layer may include at least one of carbon or a conductive polymer. For example, carbon may contain amorphous carbon. For example, the conductive polymer may contain polyacetylene, polyaniline, polypyrrole, polythiophene, etc.

In example embodiments, a content of the first silicon-based active material may be in a range from 5 wt% to 20 wt%, from 7 wt% to 18 wt%, from 8 wt% to 17 wt%, or from 10 wt% to 16 wt% based on the total weight of the second anode active material layer 124. In the above range, the electrode peak intensity ratio described later may be maintained within a predetermined range.

In some embodiments, the anode active material layer may further include a second silicon-based active material including silicon oxide. In some embodiments, the second silicon-based active material may be further included in the first anode active material layer 122. Accordingly, distribution of the silicon-based active materials in the secondary battery may be increased to further suppress expansion of the silicon-based active material and improve the life-span properties of the secondary battery.

For example, the second silicon-based active material may include SiOx (0<x<2) and/or a metal-doped SiOx (0<x<2).

In some embodiments, the second silicon-based active material may include an amorphous structure. In this case, a crystal direction of the first carbon-based active material may be adjusted, and the first orientation index of the first anode active material layer 122 described later may be adjusted.

In some embodiments, a content of the second silicon-based active material may be in a range from 0.5 wt% to 8 wt%, from 1 wt% to 7 wt%, from 2 wt% to 6 wt%, or from 2 wt% to 4 wt% based on the total weight of the first anode active material layer 122. In the above range, stability of the first anode active material layer 122 may be maintained, and the electrode peak intensity ratio described later may be maintained in a predetermined range.

For example, an anode slurry may be prepared by dispersing the active materials in a solvent. For example, a first anode slurry including the first carbon-based active material and/or the second silicon-based active material, and a second anode slurry including the second carbon-based active material and the first silicon-based active material may be sequentially coated on the anode current collector, dried and pressed to prepare the anode. The anode slurries may further include a binder. The anode slurries may further include a conductive material, a thickener, or the like.

Non-limiting examples of the solvent for the anode slurry include water, pure water, deionized water, distilled water, ethanol, isopropanol, methanol, acetone, n-propanol, t-butanol, or the like.

In some embodiments, a styrene-butadiene rubber (SBR)-based binder, carboxymethyl cellulose (CMC), a polyacrylic acid-based binder, poly(3,4-ethylenedioxythiophene) (PEDOT)-based binder, etc., may be used as the anode binder.

In example embodiments, at least one of the first anode active material layer 122 and the second anode active material layer 124 may further include the conductive material.

In example embodiments, the second anode active material layer 124 may include the conductive material.

For example, the conductive material may include a carbon-based conductive material such as graphite, carbon black, acetylene black, ketjen black, graphene, carbon nanotube, a vapor-grown carbon fiber (VGCF), etc., and/or a metal-based conductive material including tin, tin oxide, titanium oxide, a perovskite material such as LaSrCoO₃, LaSrMnO₃, etc.

In example embodiments, the conductive material may include a carbon nanotube. The carbon nanotube may include a single-walled carbon nanotube (SWCNT), a thin-walled carbon nanotube (TWCNT), a multi-walled carbon nanotube (MWCNT), or the like.

In some embodiments, the conductive material may include a single-walled carbon nanotube. Accordingly, resistance and life-span properties of the secondary battery may be improved.

In some embodiments, a content of the conductive material may be in a range from 0.01 wt% to 3 wt%, from 0.03 wt% to 2 wt%, or from 0.05 wt% to 1 wt% based on the total weight of the second anode active material layer 124. In the above range, the resistance properties of the anode may be further improved.

In example embodiments, an electrode peak intensity ratio I₁ of the anode active material layer 120 defined by Equation 1 below is in a range from 0.6 to 1.0. [Equation 1] $electrode peak intensity ratio \left({I}_{1}\right) = Ip 1 / Ip 2$

In Equation 1, Ip1 is a maximum height of a peak in a range of 2.0 Å to 2.7 Å in a pair distribution function (PDF) spectrum obtained by a PDF analysis for the anode active material layer, and Ip2 is a maximum height of a peak in a range of 3.4 Å to 4.1 Å in the PDF spectrum.

For example, the PDF analysis may be performed on the anode active material layer 120 obtained by performing formation charge and discharge of the secondary battery including the anode 130 and then disassembling the secondary battery.

For example, the electrode peak intensity ratio I₁ may correspond to a degree of dispersion of PDF spectral peaks of carbon atoms and silicon atoms included in the anode active material layer 120.

In the range of the electrode peak intensity ratio, crystallinity and amorphous property of a carbon component (e.g., the carbon-based active material and/or the porous carbon-based particle) and a silicon component of the anode active material layer may be adjusted. Accordingly, resistance and life-span properties of the secondary battery may be improved.

For example, when the electrode peak intensity ratio I₁ is greater than 1.0, lithium mobility may be reduced to degrade resistance properties of the secondary battery, and crystal stability during charging and discharging may be lowered to degrade life-span properties of the secondary battery.

For example, when the electrode peak intensity ratio I₁ is less than 0.6, an arrangement regularity of the active material particles may be decreased. Accordingly, electron mobility may be reduced, and power properties of the secondary battery may be deteriorated.

In example embodiments, the electrode peak intensity ratio I₁ may be in a range from 0.61 to 1.0, from 0.65 to 1.0, from 0.65 to 0.99, from 0.66 to 0.99, from 0.7 to 0.99, from 0.72 to 0.99, from 0.79 to 0.99, from 0.79 to 0.98, or from 0.79 to 0.96. In an embodiment, the electrode peak intensity ratio I₁ may be in a range from 0.79 to 1.0, or from 0.79 to 0.98.

In the range of the electrode peak intensity ratio defined by Equation 1, crystallinity and amorphousness of the carbon component (e.g., the carbon-based particles and/or the carbon-based active material (e.g., graphite)) and the silicon component (the silicon-based active material) of the anode active material layer may be appropriately adjusted. Accordingly, power and life-span properiesof the secondary battery may be improved.

In example embodiments, an electrode peak intensity ratio I₂ of the anode active material layer 120 defined by Equation 2 below may be in a range from 1.0 to 1.5. [Equation 2] $electrode peak intensity ratio \left({I}_{2}\right) = Ip 2 / Ip 3$

In Equation 2, Ip2 is a maximum height of a peak in a range of 3.4 Å to 4.1 Å of the pair distribution function (PDF) spectrum obtained by the PDF analysis for the anode active material layer, and Ip3 is a maximum height of a peak in the range of 4.1 Å to 4.9 Å of the PDF spectrum.

In the range of the electrode peak intensity ratio I₂, crystallinity and amorphousness of the carbon component (e.g., the carbon-based particle and/or the carbon-based active material (e.g., graphite)) and the silicon component (the silicon-based active material) of the anode active material layer may be appropriately controlled. Accordingly, power and life-span properties of the secondary battery may be improved.

In example embodiments, the electrode peak intensity ratio I₂ may be in a range from 1.05 to 1.5, from 1.1 to 1.5, from 1.1 to 1.4, from 1.17 to 1.4, from 1.13 to 1.37, from 1.19 to 1.26, from 1.19 to 1.23, or from 1.19 to 1.2.

For example, crystallinity and amorphousness of each of the carbon component and the silicon component may be controlled to adjust the electrode peak intensity ratio of Equation 1 or 2. Accordingly, power and life-span properties of the secondary battery may be improved. For example, the electrode peak intensity ratio I₂ may be in a range from 1.13 to 1.37.

In example embodiments, the electrode peak intensity ratio I₁ defined by Equation 1 may be in a range from 0.79 to 1.0, and the electrode peak intensity ratio I₂ defined by Equation 2 may be in a range from 1.13 to 1.37. Accordingly, resistance properties of the secondary battery may be improved, and rapid life-span properties may be improved.

A scattering data for the above PDF analysis may be collected, e.g., from a beamline 1C of Pohang Light Source (PLS-II) by Pohang Accelerator Research Institute (PAL). In addition to the beamline 1C, other equipment capable of measuring the scattering data may be used.

Specifically, the scattering data for the above PDF analysis may be measured by an X-ray diffraction (XRD) (λ = 0.71073 °) analysis using Mo (Molybdenum) as an X-ray generation target.

For example, the anode active material layer may be separated from the anode, and then placed in a Quartz glass capillary to fix the sample so that the X-ray may be incident. The scattering data can be measured by a 2D scanning at a step size of 0.1 degree in a range of 5 to 115 degrees using a high energy X-ray (17.44 KeV) with a wavelength (λ) of 0.71073 Å. The scattering data may include a 2D scattering image.

A 1D scattering intensity data may be obtained by integrating the 2D scattering image by a software (e.g., Dioptas). In the process of obtaining the 1D scattering intensity data, a diffraction peak of the current collector may be planarized when the current collector and the active material particles are adhered to each other,

For example, a background data may be obtained by collecting an X-ray scattered in atmosphere.

For example, a structural function S(Q) may be obtained by applying the 1D scattering intensity data, the background data, the wavelength and chemical composition to a software (e.g., PDFgetX3). In this case, a background scale of the background data compared to the 1D scattering intensity data may be set to 1.0, and a range of Q may be set to 0.1 to 12.0.

A G(r) function may be obtained by Fourier-transforming S(Q). The PDF spectrum may be obtained by illustrating a change in G(r) according to an interatomic distance (r).

Ip1, Ip2 and Ip3 of Equations 1 and 2 may be measured by drawing a baseline parallel to a horizontal axis (r) based on the lowest height in a vertical axis G(r) in the r range from 0 Å to 6 Å of the PDF spectrum, and then deriving a center peak value of a peak having a maximum height based on the baseline.

In example embodiments, a first orientation index of the first anode active material layer 122 according to Equation 3 and a second orientation index of the second anode active material layer 124 according to Equation 4 may be different from each other. [Equation 3] $first orientation index \left(O.{I}_{\left(1\right)}\right) = I \left(004\right) / I \left(110\right)$

In Equation 3, I(004) is a peak intensity of a (004) plane peak of the first anode active material layer measured by an X-ray diffraction (XRD) analysis, I(110) is a peak intensity of a (110) plane peak of the first anode active material layer measured by the XRD analysis. [Equation 4] $second orientation index \left(O.{I}_{\left(2\right)}\right) = I \left(004\right) / I \left(110\right)$

In Equation 4, I(004) is a peak intensity of a (004) plane peak of the second anode active material layer measured by an X-ray diffraction (XRD) analysis, and I(110) is a peak intensity of a (110) plane peak of the second anode active material layer measured by the XRD analysis.

The orientation indexes may indicate orientation or crystallinity of the anode active materials contained in the anode active material layers. As the orientation index becomes higher, an isotropic degree of the anode active material particles may become lower. As the orientation index becomes lower, the isotropic degree of the anode active material particles may become higher.

For example, the first orientation index may be measured from the first anode active material layer 122 and the second orientation index may be measured from the second anode active material layer 124.

For example, a portion (e.g., a thickness of about 20 µm) of the anode active material layer 120 from an inner surface adjacent to the anode current collector 125 in a vertical direction to the anode current collector 125 toward an outer surface may be XRD-analyzed to measure the peak intensity of the (004) plane and the peak intensity of the (110) plane of the first anode active material layer 122. The first orientation index may be calculated from the measured values.

For example, a portion (e.g., a thickness of about 20 µm) from the outer surface not adjacent to the anode current collector 125 of the anode 130 in a direction vertical to the anode current collector 125 toward the anode current collector 125 may be XRD-analyzed to measure the peak intensity of the (004) plane and the peak intensity of the (110) plane of the second cathode active material layer 124. The second orientation index may be calculated from the measured values.

The numerical comparison of the first orientation index and the second orientation index, which will be described later, may vary depending on the type of thickener included in each anode active material layer, but is not limited thereto. For example, the first orientation index and the second orientation index may vary depending on compositions, contents, etc., of the materials included in each of the anode active material layers, such as the above-described carbon-based active materials and silicon-based active materials. Further, in a range in which the electrode peak intensity ratio is maintained within a predetermined range, the values of the first orientation index and the second orientation index may be adjusted.

In some embodiments, the first orientation index may be less than the second orientation index.

In some embodiments, when the first orientation index is less than the second orientation index, the first orientation index may be 1.51 or more, and 1.81 or less, and the second orientation index may be 1.67 or more and 2.35 or less. For example, the first orientation may be 1.51 or more, 1.52 or more, 1.54 or more, 1.57 or more, or 1.59 or more, and may be 1.81 or less, 1.76 or less, or 1.64 or less. The second orientation index may be 1.67 or more, 1.85 or more, 1.89 or more, 1.96 or more, or 1.99 or more, and may be 2.35 or less, 2.29 or less, 2.22 or less, 2.17 or less, or 2.11 or less.

In some embodiments, when the first orientation index is less than the second orientation index, the first orientation index may be 1.5 or more and 1.8 or less, and the second orientation index may be greater than 1.5 and 2.2 or less. For example, the first orientation may be 1.52 or more, 1.54 or more, or 1.57 or more, or 1.76 or less, or 1.64 or less. The second orientation index may be 1.67 or more, 1.85 or more, 1.89 or more, or 1.99 or more, and may be 2.17 or less, or 2.11 or less. In the above range, an active surface of the second anode active material layer 124 may be sufficiently exposed to reduce resistance of the secondary battery. Additionally, the electrode peak intensity ratio may be efficiently maintained within a predetermined range.

In some embodiments, the first orientation index may be greater than the second orientation index.

In some embodiments, when the first orientation index is greater than the second orientation index, the first orientation index may be 1.56 or more and 2.6 or less, and the second orientation index may be 1.35 or more and 2.55 or less. For example, the first orientation index may be 1.56 or more, 1.58 or more, or 1.89 or more, and may be 2.5 or less, or 2.4 or less. The second orientation index may be 1.35 or more, 1.38 or more, or 1.66 or more, and may be 2.55 or less, 2.5 or less, 2.4 or less, or 2.27 or less.

In some embodiments, when the first orientation index is greater than the second orientation index, the first orientation index may be 1.9 or more and 2.6 or less, and the second orientation index may be 1.5 or more and less than 2.5. For example, the first orientation index may be 2.1 or more, 2.2 or more, 2.3 or more, 2.35 or more, 2.5 or less, or 2.4 or less. The second orientation index may be 2.0 or more, 2.1 or more, 2.2 or more, or 2.22 or more, and 2.4 or less, 2.3 or less, or 2.27 or less.

In the above range, improved resistance properties may be maintained by the first anode active material layer 122, and decomposition of the active materials included in the second anode active material layer 124 may be suppressed, thereby improving life-span properties of the secondary battery. Additionally, the electrode peak intensity ratio may be efficiently maintained within a predetermined range.

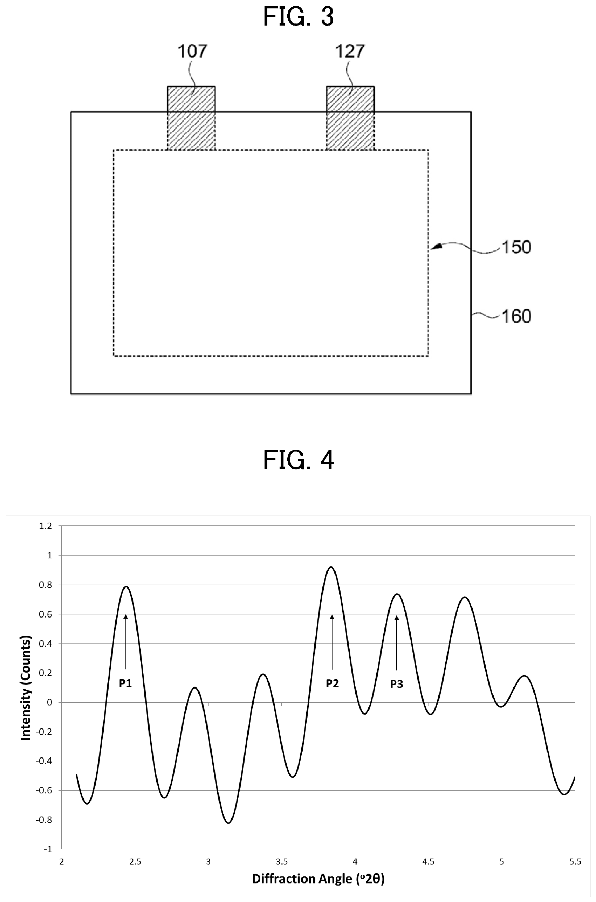

FIG. 2 and FIG. 3 are a schematic cross-sectional view and a schematic plan view of a lithium secondary battery, respectively, according to exemplary embodiments.

The lithium secondary battery may include the above-described anode 130 and the cathode 100 facing the anode 130.

The cathode 100 may include a cathode current collector 105 and a cathode active material layer 110 formed on at least one surface of the cathode current collector 105.

The cathode current collector 105 may include stainless steel, nickel, aluminum, titanium, or an alloy thereof. The cathode current collector 105 may include aluminum or stainless steel surface-treated with carbon, nickel, titanium, silver, or the like. For example, a thickness of the cathode electrode current collector 105 may be in a range from 5 µm to 50 µm.

The cathode active material layer 110 may include a cathode active material. The cathode active material may contain a compound capable of reversibly intercalating and de-intercalating lithium ions.

In example embodiments, the cathode active material may include a lithium-nickel metal oxide. The lithium-nickel metal oxide may further include at least one of cobalt (Co), manganese (Mn) and aluminum (Al).

In some embodiments, the cathode active material or the lithium-nickel metal oxide may have a layered structure or a crystal structure represented by Chemical Formula 1.

[Chemical Formula 1] LiₓNiₐM_{b}O_{2+z}

In Chemical Formula 1, 0.9≤x≤1.2, 0.5≤a≤0.99, 0.01≤b≤0.5, and -0.5≤z≤0.1. As described above, M may include Co, Mn and/or Al.

The chemical structure represented by Chemical Formula 1 shows a bonding relationship included in the layered structure or the crystal structure of the cathode active material, and does not exclude other additional elements. For example, M contains Co and/or Mn, and Co and/or Mn may be provided together with Ni as main active elements of the cathode active material. Chemical Formula 1 is provided to express the bonding relationship of the main active elements, and is to be understood as encompassing the introduction and substitution of the additional element.

In an embodiment, an auxiliary element may be further included in addition to the main active elements to promote chemical stability of the cathode active material or the layered structure/crystal structure. The auxiliary element may be mixed together in the layered structure/crystal structure to form a bond, and this case is to be understood as being included within the range of the chemical structure represented by Chemical Formula 1.

The auxiliary element may include at least one selected from the group consisting of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr. For example, the auxiliary element may function as an auxiliary active element such as Al which may contribute to capacity/ power activities of the cathode active material together with Co or Mn.

The cathode active material may further include a coating element or a doping element. For example, elements substantially the same as or similar to the above-described auxiliary elements may be used as the coating element or the doping element. For example, one of the above-described elements may be used alone, or a combination of two or more of the above-described elements may be used as the coating element or the doping element.

The coating element or the doping element may be present on the surface of the lithium-nickel metal oxide particle, or may be included in a binding structure represented by Chemical Formula 1 by penetrating through the surface of the lithium-nickel metal oxide particle.

The cathode active material may include a nickel-cobalt-manganese (NCM)-based lithium oxide. In this case, an NCM-based lithium oxide having increased nickel content may be used.

Ni may be provided as a transition metal related to power and capacity of the lithium secondary battery. Thus, as described above, as the high-Ni composition is employed in the cathode active material, a high-capacity cathode and a high-capacity lithium secondary battery may be provided.

However, as a Ni content increases, long-term storage stability and life-span stability of the cathode or the secondary battery may be relatively decreased, and side reactions with an electrolyte may also be increased. However, according to example embodiments, life-span stability and capacity retention properties may be improved using Mn while maintaining an electrical conductivity by including Co.

The Ni content (e.g., a mole fraction of nickel based on a total moles of nickel, cobalt and manganese) in the NCM-based lithium oxide may be 0.5 or more, 0.6 or more, 0.7 or more, or 0.8 or more. In some embodiments, the Ni content may be in a range from 0.8 to 0.95, from 0.82 to 0.95, from 0.83 to 0.95, from 0.84 to 0.95, from 0.85 to 0.95, or from 0.88 to 0.95.

In some embodiments, the cathode active material may include a lithium cobalt oxide-based active material, a lithium manganese oxide-based active material, a lithium nickel oxide-based active material, or a lithium iron phosphate-based (LFP) active material (for example, LiFePO₄).

In some embodiments, the cathode active material may include a lithium-rich layered oxide (LLO)/over lithiated oxide (OLO)-based active material, an Mn-rich-based active material, a Co-less-based active material, or the like, having a chemical structure or a crystal structure indicated by, e.g., Chemical Formula 2. These may be used alone or in combination of two or more therefrom.

[Chemical Formula 2] p[Li₂MnO₃]·(1-p)[Li_{q}JO₂]

In Formula 2, 0<p<1 and 0.9≤q≤1.2, and J may include at least one element among Mn, Ni, Co, Fe, Cr, V, Cu, Zn, Ti, Al, Mg and B.

The cathode slurry may be prepared by mixing the cathode active material in a solvent. The cathode slurry may be coated on at least one surface of a cathode current collector 105, and then dried and pressed to form the cathode active material layer 110. The coating may include a gravure coating, a slot die coating, a multi-layer simultaneous die coating, an imprinting, a doctor blade coating, a dip coating, a bar coating, a casting, or the like. The cathode active material layer 110 may further include a binder, and optionally may further include a conductive material, a thickener, or the like.

N-methyl-2-pyrrolidone (NMP), dimethylformamide, dimethylacetamide, N, N-dimethylaminopropylamine, ethylene oxide, tetrahydrofuran, or the like may be used as the solvent.

The binder may include polyvinylidene fluoride (PVDF), vinylidene fluoride-hexafluoropropylene copolymer (poly(vinylidene fluoride-co-hexafluoropropylene)), polyacrylonitrile, polymethylmethacrylate, acrylonitrile-butadiene rubber (NBR), polybutadiene rubber (BR), styrene-butadiene rubber (SBR), styrene-butadiene rubber (SBR), or the like. These may be used alone or in a combination of two or more therefrom.

In an embodiment, a PVDF-based binder may be used as the cathode binder. In this case, an amount of the binder for forming the cathode active material layer 110 may be reduced and an amount of the cathode active material may be relatively increased. Accordingly, power and capacity properties of the secondary battery may be improved.

The conductive material may be added to enhance conductivity and/or mobility of lithium ions or electrons of the cathode active material layer 110. For example, the conductive material may include a carbon-based conductive material such as graphite, carbon black, acetylene black, ketjen black, graphene, carbon nanotube, a vapor-grown carbon fiber (VGCF), etc., and/or a metal-based conductive material including tin, tin oxide, titanium oxide, a perovskite material such as LaSrCoO₃ and LaSrMnO₃, or the like. These may be used alone or in a combination of two or more therefrom.

The cathode slurry may further include a thickener and/or a dispersant. In an embodiment, the cathode slurry may include a thickener such as carboxymethyl cellulose (CMC).

In example embodiments, a separator 140 may be interposed between the cathode 100 and the anode 130. The separator 140 may be configured to prevent an electrical short circuit between the cathode 100 and the anode 130 and to generate ion flow. For example, a thickness of the separator may be in a range from 10 µm to 20 µm.

For example, the separator 140 may include a porous polymer film or a porous nonwoven fabric.

The porous polymer film may include a polyolefin-based polymer such as an ethylene polymer, a propylene polymer, an ethylene/butene copolymer, an ethylene/hexene copolymer, an ethylene/methacrylate copolymer, or the like. These may be used alone or in a combination of two or more therefrom.

The porous nonwoven fabric may include a glass fiber with a high melting point, a polyethylene terephthalate fiber, or the like.

The separator 140 may include a ceramic-based material. For example, inorganic particles may be coated on a polymer film or dispersed in the polymer film to improve heat resistance.

The separator 140 may have a single-layered or multi-layered structure including the polymer film and/or the nonwoven fabric described above.

In example embodiments, an electrode cell may be defined by the cathode 100, the anode 130 and the separator 140, and a plurality of electrode cells may be stacked to form, e.g., a jelly roll-shaped electrode assembly 150. For example, the electrode assembly 150 may be formed by winding, stacking, zigzag folding, stack-folding, or the like, of the separator 140.

The electrode assembly 150 may be accommodated together with an electrolyte solution in a case 160 to define a lithium secondary battery. In example embodiments, a non-aqueous electrolyte solution may be used as the electrolyte solution.

The non-aqueous electrolyte includes a lithium salt as an electrolyte and an organic solvent. The lithium salt may be expressed as, e.g., Li⁺X^{-,} and an anion (X⁻) of the lithium salt may include F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, or the like.

The organic solvent may include, e.g., propylene carbonate (PC), ethylene carbonate (EC), butylene carbonate, diethyl carbonate (DEC), dimethyl carbonate (DMC), ethylmethyl carbonate (EMC), methylpropyl carbonate, ethylpropyl carbonate, dipropyl carbonate, vinylene carbonate, methyl acetate (MA), ethyl acetate (EA), n-propylacetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), tetrahydrofuran (THF), 2-methyltetrahydrofuran, ethyl alcohol, isopropyl alcohol, dimethyl sulfoxide, acetonitrile, dimethoxyethane, diethoxyethane, sulfolane, gamma-butyrolactone, propylene, etc. These may be used alone or in a combination of two or more therefrom.

The non-aqueous electrolyte solution may further include an additive. The additive may include, e.g., a cyclic carbonate-based compound, a fluorine-substituted carbonate-based compound, a sultone-based compound, a cyclic sulfate-based compound, a cyclic sulfite-based compound, a phosphate-based compound, a borate-based compound, or the like. These may be used alone or in a combination of two or more therefrom.

The cyclic carbonate-based compound may include vinylene carbonate (VC), vinyl ethylene carbonate (VEC), etc.

The fluorine-substituted carbonate-based compound may include fluoroethylene carbonate (FEC), etc.

The sultone-based compound may include 1,3-propane sultone, 1,3-propene sultone, 1,4-butane sultone, or the like.

The cyclic sulfate-based compound may include 1,2-ethylene sulfate, 1,2-propylene sulfate, etc.

The cyclic sulfite-based compound may include ethylene sulfite, butylene sulfite, and the like.

The phosphate-based compound may include lithium difluorobis-oxalato phosphate, lithium difluorophosphate, etc.

The borate-based compound may include lithium bis(oxalato) borate, etc.

In some embodiments, a solid electrolyte may be used instead of the above-described non-aqueous electrolyte solution. In this case, the lithium secondary battery may be manufactured in the form of an all solid state battery. A solid electrolyte layer may be disposed between the cathode 100 and the anode 130 instead of the above-described separator 140.

The solid electrolyte may contain a sulfide-based electrolyte. Non-limiting examples of the sulfide-based electrolyte may include Li₂S-P₂S₅, Li₂S-P₂S₅-LiCl, Li₂S-P₂S₅-LiBr, Li₂S-P₂S₅-LiCl-LiBr, Li₂S-P₂S₅-Li2O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (m and n are positive numbers, and Z is Ge, Zn or Ga), Li₂S-GeS₂, Li₂S-SiS₂-Li₃PO₄, Li₂S-SiS₂-LiₚMO_{q}, (p and q are positive numbers, and M is P, Si, Ge, B, Al, Ga or In), Li₇-xPS₆-xClₓ (0≤x≤2), Li₇-xPS₆-xBrₓ (0≤x≤2), Li₇-xPS₆-xIₓ (0≤x≤2). These may be used alone or in combination of two or more therefrom.

In an embodiment, the solid electrolyte may include, e.g., an oxide-based amorphous solid electrolyte such as Li₂O-B₂O₃-P₂O₅, Li₂O-SiO₂, Li₂O-B₂O₃, Li₂O-B₂O₃-ZnO, or the like.

As illustrated in FIGS. 2 and 3, electrode tabs (a cathode tab and an anode tab) may protrude from the cathode current collector 105 and the anode current collector 125 included in each electrode cell, and may extend to one side of the case 160. The electrode tabs may be fused together with the one side of the case 160 to form an electrode lead (a cathode lead 107 and an anode lead 127) extending or exposed to an outside of the case 160.

For example, the lithium secondary battery may be manufactured in a cylindrical type using a can, a prismatic type, a pouch type, or a coin type.

The above-described embodiments of the present disclosure include aspects below.

Aspect 1) An anode for a lithium secondary battery, comprising: an anode current collector; and an anode active material layer disposed on at least one surface of the anode current collector and including an anode active material, wherein an electrode peak intensity ratio (I₁) defined by Equation 1 of the anode active material layer is in a range from 0.6 to 1.0:

[Equation 1] $electrode peak intensity ratio \left({I}_{1}\right) = Ip 1 / Ip 2$
wherein, in Equation 1, Ip1 is a maximum height of a peak in a range of 2.0 Å to 2.7 Å in a pair distribution function (PDF) spectrum obtained by a PDF analysis for the anode active material layer, and Ip2 is a maximum height of a peak in a range of 3.4 Å to 4.1 Å in the PDF spectrum.

Aspect 2) The anode for a lithium secondary battery of Aspect 1, wherein an electrode peak intensity ratio (I₂) defined by Equation 2 of the anode active material layer is in a range from 1.0 to 1.5:

[Equation 2] $electrode peak intensity ratio \left({I}_{2}\right) = Ip 2 / Ip 3$
wherein, in Equation 2, Ip2 is a maximum height of a peak in a range of 3.4 Å to 4.1 Å in the pair distribution function (PDF) spectrum obtained by the PDF analysis for the anode active material layer, and Ip3 is a maximum height of a peak in a range of 4.1 Å to 4.9 Å in the PDF spectrum.

Aspect 3) The anode for a lithium secondary battery of any one of Aspects 1 and 2, wherein the anode active material layer comprises a first anode active material layer and a second anode active material layer on the first anode active material layer.

Aspect 4) The anode for a lithium secondary battery of Aspect 3, wherein a first orientation index according to Equation 3 of the first anode active material layer and a second orientation index according to Equation 4 of the second anode active material layer are different from each other:

[Equation 3] $first orientation index \left(O.{I}_{\left(1\right)}\right) = I \left(004\right) / I \left(110\right)$
wherein, in Equation 3, I(004) is a peak intensity of a (004) plane peak of the first anode active material layer measured by an X-ray diffraction (XRD) analysis, and I(110) is a peak intensity of a (110) plane of the first anode active material layer measured by the XRD analysis,

[Equation 4] $second orientation index \left(O.{I}_{\left(2\right)}\right) = I \left(004\right) / I \left(110\right)$
wherein, in Equation 4, I(004) is a peak intensity of a (004) plane peak of the second anode active material layer measured by the XRD analysis, and I(110) is a peak intensity of a (110) plane peak of the second anode active material layer measured by the XRD analysis.

Aspect 5) The anode for a lithium secondary battery of Aspect 4, wherein the first orientation index is smaller than the second orientation index.

Aspect 6) The anode for a lithium secondary battery of Aspect 5, wherein the first orientation index is 1.5 or more and 1.8 or less, and the second orientation index is greater than 1.5 and 2.2 or less.

Aspect 7) The anode for a lithium secondary battery of Aspect 4, wherein the first orientation index is greater than the second orientation index.

Aspect 8) The anode for a lithium secondary battery of Aspect 7, wherein the first orientation index is 1.9 or more and 2.6 or less, and the second orientation index is 1.5 or more and less than 2.5.

Aspect 9) The anode for a lithium secondary battery of any one of Aspects 1 and 2, wherein the anode active material layer includes a first anode active material layer including a first carbon-based active material, and a second anode active material layer including a second carbon-based active material and a first silicon-based active material on the first anode active material layer.

Aspect 10) The anode for a lithium secondary battery of Aspect 9, wherein the first silicon-based active material includes a carbon-silicon composite.

Aspect 11) The anode for a lithium secondary battery of any one of Aspect 9 and 10, wherein a content of the first silicon-based active material is in a range from 5 wt% to 20 wt% based on a total weight of the second anode active material layer.

Aspect 12) The anode for a lithium secondary battery of any one claims 9 to 11, wherein the first anode active material layer further includes a second silicon-based active material including a silicon oxide.

Aspect 13) The anode for a lithium secondary battery of Aspect 12, wherein a content of the second silicon-based active material is in a range from 0.5 wt% to 8 wt% based on a total weight of the first anode active material layer.

Aspect 14) The anode for a lithium secondary battery of any one of claims 1 to 13, wherein the anode active material includes a composite particle that includes a carbon-based particle including pores and a silicon-containing layer on the carbon-based particle.

Aspect 15) A lithium secondary battery, comprising: the anode for a lithium secondary battery according to any one of Aspects 1 to 14; and a cathode opposing the anode.

### (1) Preparation of carbon-based active material

Carbon-based active materials satisfying the graphite type, the particle size and the orientation index (O.I) as shown in Table 1 below were prepared.

**[Table 1]**

| | type of graphite | particle size (D50, µm) | O.I (I(004)/I(110)) |
|---|---|---|---|
| Graphite 1 | artificial graphite | 12.1 | 6.4 |
| Graphite 2 | artificial graphite | 11.5 | 2.05 |
| Graphite 3 | artificial graphite | 10.0 | 3.34 |
| Graphite 4 | natural graphite | 10.5 | 1.45 |

### (2) Preparation of silicon-based active material

### 1) Preparation of Silicon 1

### Preparation of carbon-based particle

Pitch and potassium acetate were dry-mixed in a weight ratio of 5:5 and calcined at 800 °C for 2 h. The fired mixture was washed with an excess of 0.5 M HCl aqueous solution to form carbon-based particles including pores. A specific volume of the pores of the carbon-based particles was adjusted to 0.6 cm³/g.

### Formation of silicon-containing coating

A silicon-containing gas containing a silane gas and an argon gas was injected into a CVD coater at a flow rate of 50 mL/min to 100 mL/min. A content of the silane gas relative to a total volume of the silicon-containing gas was 50 vol%. A temperature was increased to 550 °C at a ramping rate of 5 °C/min to 20 °C/min, and the temperature was maintained for about 120 minutes to obtain a silicon-based active material including a carbon-silicon composite. A silicon content based on the total weight of the silicon-based active material was 48 wt%.

### 2) Preparation of Silicon 2

A silicon-based active material was prepared by the same method as that in Silicon 1, except that the temperature was increased to 500 °C.

### 3) Preparation of Silicon 3

A silicon-based active material was prepared by the same method as that in Silicon 1, except that a polyacetylene gas was co-deposited on a surface of the silicon-based active material and heat-treated at 800 °C to 1100 °C for 1 hour or more.

### 4) Preparation of Silicon 4

A silicon-based active material was prepared by the same method as that in Silicon 1, except that a silicon content was changed to 50 wt% based on the total weight of the silicon-based active material.

### 5) Preparation of Silicon 5

When preparing the carbon-based particles, pitch and potassium acetate were dry-mixed in a weight ratio of 6:4 and fired at 800 °C for 4 hours. The fired mixture was washed with a 0.5 M NaOH aqueous solution instead of the HCl aqueous solution to prepare carbon-based particles including pores. A silicon active material was prepared by the same method as that in silicon 4, except that a specific volume of the pores of the carbon-based particle was 0.55 cm³/g.

### 6) Preparation of Silicone 6 : different raw material

A silicon active material was prepared by the same method as that in Silicon 1, except that the same amount of dispersion of silica having an average particle diameter of 100 nm was added instead of potassium acetate.

### 7) Preparation of Silicon 7

A mixture of a metal silicon and silicon dioxide as a raw material was introduced into the reactor, and vaporized material was deposited on an adsorption plate in an vacuum atmosphere of 10 Pa, cooled sufficiently. Sedimented material was extracted and pulverized by a ball mill. A value of x of SiOx of silicon compound particles obtained as described above was adjusted to 0<x<2.0. Subsequently, a particle diameter of the silicon compound particles was adjusted by classification. Thereafter, a pyrolysis CVD was performed to coat a surface of the silicon compound particle with a carbon material. An average thickness of the carbon material was 100 nm. The prepared silicon compound was SiO particles with an average particle diameter (D50) of 8 µm.

The types and physical properties of the obtained silicon-based active material are shown in Table 2. I₁ and I₂ in Table 2 are peak intensity ratios measured by a pair distribution function (PDF) analysis described below with respect to each of the silicon-based active material.

**[Table 2]**

| | type of Si-based active material | discharge capacity (mAh/g) | I₁ (Ip1/Ip2) | I₂ (Ip2/Ip3) |
|---|---|---|---|---|
| Silicon 1 | Si/C | 1886 | 1.73 | 3.45 |
| Silicon 2 | Si/C | 1870 | 1.73 | 3.74 |
| Silicon 3 | Si/C | 1867 | 1.90 | 3.68 |
| Silicon 4 | Si/C | 1942 | 1.82 | 2.96 |
| Silicon 5 | Si/C | 1924 | 1.86 | 2.93 |
| Silicon 6 | Si/C | 1933 | 2.03 | 2.67 |
| Silicon 7 | SiOx(0<x<2) | 1620 | 0.53 | 3.25 |

### (3) Fabrication of anode and secondary battery

### Example 1

As shown in Table 3 below, 96.3 wt% of a first carbon-based active material (Graphite 1) was mixed with 2.5 wt% of styrene-butadiene rubber (SBR) as a binder, and 1.2 wt% of carboxymethyl cellulose as a thickener to obtain a first anode slurry.

A second anode slurry was obtained by mixing 82.125 wt% of a second carbon-based active material (Graphite 2), 16 wt% of a first silicon-based active material (Silicon 1), 0.175 wt% of a single-walled carbon nanotube (SWCNT) pre-dispersion as a conductive material, 0.5 wt% of SBR as a binder, and 1.2 wt% of CMC as a thickener.

The first anode slurry was coated on a copper substrate to form a first preliminary anode active material layer, and the second anode slurry was simultaneously coated on the first preliminary anode active material layer to form a second preliminary anode active material layer. Thereafter, drying and pressing were performed to prepare an anode including a first anode active material layer and a second anode active material layer.

### Fabrication of a lithium half cell (Li-half cell)

A lithium-half cell including the anode and a lithium metal as a counter electrode was fabricated.

Specifically, a CR2016 (diameter 20 mm, thickness 1.6 mm) standard lithium coin half-cell was constructed by interposing a separator (polyethylene, thickness 20 µm) between the anode and the lithium metal (thickness 1 mm).

A combination of the lithium metal/separator/anode was placed on a coin cell plate, an electrolyte solution was injected, a cap was covered, and then clamped. The electrolyte solution was prepared by forming a 1M LiPF₆ solution using a mixed solvent of EC/EMC (3:7; volume ratio), and adding fluoroethylene carbonate (FEC) of 2.0 volume% based on ae total volume of the electrolyte solution was added. After clamping, impregnation was performed for 3 to 24 hours, followed by 3 cycles of charging and discharging at 0.1C (charging condition: CC-CV 0.1C 0.01V 0.01C CUT-OFF, discharging condition: CC 0.1C 1.5V CUT-OFF).

### Fabrication of lithium secondary battery

A cathode slurry was prepared by mixing LiNi_{0.88}Co_{0.1}Mn_{0.02}O₂ as a cathode active material, carbon black as a conductive material, and polyvinylidene fluoride (PVDF) as a binder in a weight ratio of 96.5:2:1.5.

The cathode slurry was uniformly coated on an aluminum current collector (thickness: 12 µm), vacuum-dried and pressed to obtain a cathode.

The cathode and the anode were notched to a predetermined size, and an electrode cell was formed with a separator (polyethylene, thickness: 13 µm) interposed between the cathode and the anode. Tab portions of the cathode and the anode were each welded. The welded cathode/separator/anode assembly was put into a pouch, and three sides were sealed except for an electrolyte injection side. A region around the electrode tab was included in the sealed portion. An electrolyte solution was injected through the electrolyte injection side, the electrolyte injection side was also sealed, and then impregnation was performed for 12 hours or more to prepare a lithium secondary battery.

In the preparation of the electrolyte solution, a 1M LiPF₆ solution was prepared by using a mixed solvent of EC/EMC/DEC (25/45/30; volume ratio), and 1 wt% of vinylene carbonate (VC), 0.5 wt% of 1,3-propensultone (PRS), and 0.5 wt% of lithium bis(oxalato)borate (LiBOB) were added based on a total weight of the solution.

A pre-charging was performed on the lithium secondary battery with a current corresponding to 0.25C for 36 minutes. After 1 hour, degassing was performed, aging was performed for more than 24 hours, and then formation charging and discharging was performed (charging condition: CC/CV 0.2C 4.2V 0.05C CUT-OFF, discharging condition: CC 0.2C 2.5V CUTOFF).

### Example 2

An anode, a lithium-half cell and a lithium secondary battery were manufactured by the same method as that in Example 1, except that the second silicon-based active material (Silicon 7) including a silicon oxide (SiOx, 0<x<2) was included in the first anode slurry in an amount of 2 wt%, the content of the first carbon-based active material (Graphite 1) was changed to 94.3 wt%, and the content of the second carbon-based active material (Graphite 2) was changed to 84.125 wt%, and the content of the first silicon-based active material (Silicon 1) was changed to 14 wt%.

### Example 3

An anode, a lithium-half cell and a lithium secondary battery were manufactured by the same method as that in Example 1, except that the contents of the carbon-based active materials and the silicon-based active material were changed as shown in Table 3 below.

### Examples 4 and 5

An anode, a lithium-half cell and a lithium secondary battery were manufactured by the same method as that in Example 2, except that contents of carbon-based active materials and silicon-based active materials were changed as shown in Table 3 below.

### Example 6

An anode, a lithium-half cell and a lithium secondary battery were manufactured by the same method as that in Example 1, except that the first silicon-based active material was changed to Silicon 2.

### Example 7

An anode, a lithium-half cell and a lithium secondary battery were manufactured by the same method as that in Example 2, except that the second silicon-based active material was changed to Silicon 1.

### Example 8

An anode, a lithium-half cell and a lithium secondary battery were manufactured by the same method as that in Example 7, except that the contents of the first carbon-based active material, the second carbon-based active material, the first silicon-based active material and the second silicon-based active material were changed as shown in Table 3 below, and 0.175 wt% of an SWCNT pre-dispersion was added to the first anode active material layer.

### Example 9

An anode, a lithium-half cell and a lithium secondary battery were manufactured by the same method as that in in Example 2, except that artificial graphite (average particle diameter (D50) of 10 µm) (Graphite 3) was used instead of the first carbon-based active material (Graphite 1) and the type of the silicon-based active material in the first anode active material layer was changed as shown in Table 3 below.

### Example 10

An anode, a lithium-half cell and a lithium secondary battery were manufactured by the same method as that in Example 2, except that natural graphite (average particle diameter (D50) of 10.5 µm) (Graphite 4) was used instead of the first carbon-based active material (Graphite 1) and the type of the silicon-based active material in the first anode active material layer was changed as shown in Table 3 below.

### Example 11

An anode, a lithium-half cell and a lithium secondary battery were manufactured by the same method as that in Example 1, except that the first silicon-based active material was changed to Silicon 3.

### Examples 12 and 13

An anode, a lithium-half cell and a lithium secondary battery were manufactured by the same method as that in Example 8, except that the contents of the first silicon-based active material and the second silicon-based active material were changed as shown in Table 3 below, and 0.175 wt% of an SWCNT pre-dispersion was added to the first anode active material layer.

### Examples 14 and 15

An anode, a lithium-half cell and a lithium secondary battery were manufactured by the same method as that in Example 1, except that contents of carbon-based active materials and silicon-based active materials were changed as shown in Table 3 below.

### Comparative Example 1

An anode, a lithium-half cell and a lithium secondary battery were manufactured by the same method as that Example 1, except that the contents of the carbon-based active materials and the silicon-based active material, and the type of the silicon-based active material were changed as shown in Table 3 below.

### Comparative Example 2

An anode, a lithium-half cell and a lithium secondary battery were manufactured by the same method as that Example 2, except that the first silicon-based active material was changed to Silicon 4.

### Comparative Example 3

An anode, a lithium-half cell and a lithium secondary battery were manufactured by the same method as that Example 2, except that the first silicon-based active material was changed to Silicon 5.

### Comparative Example 4

An anode, a lithium-half cell and a lithium secondary battery were manufactured by the same method as that in Example 2, except that the first silicon-based active material was changed to Silicon 6.

### Comparative Example 5

An anode, a lithium-half cell and a lithium secondary battery were manufactured by the same method as that in Example 2, except that 0.65 wt% of a multi-walled carbon nanotube (MWCNT) pre-dispersion was used instead of SWCNT, and the silicon-based active material was changed as shown in Table 3.

### Comparative Example 6

As shown in Table 3 below, 80.125 wt% of the first carbon-based active material (Graphite 1), 16 wt% of the second silicon-based active material (Silicon 1), 0.175 wt% of a single-walled carbon nanotube (SWCNT) pre-dispersion as a conductive material, 2.5 wt% of styrene-butadiene rubber (SBR) as a binder, and 1.2 wt% of carboxymethyl cellulose as a thickener were mixed to obtain a first anode slurry.

A second anode slurry was obtained by mixing 98.3 wt% of the second carbon-based active material (Graphite 2), 0.5 wt% of SBR as a binder, and 1.2 wt% of CMC as a thickener.

An anode, a lithium-half cell and a lithium secondary battery were manufactured by the same method as that in Example 1, except for the above-mentioned details.

### (4) Pair distribution function (PDF) analysis for anode active material layer

After formation charge and discharge of each lithium-half cell manufactured according to the above-described Examples and Comparative Examples, the lithium-half cell was discharged to 2.2 V. The anode was obtained by disassembling the lithium-half cell, a PDF analysis was performed on a portion corresponding to 20 µm (a portion of the second cathode active material layer) in a thickness direction from an outer surface to obtain a PDF spectral graph with a vertical axis of a PDF function G(r) and a horizontal axis of r(Å) corresponding to a distance between atoms.

Specifically, a scattering data for the above PDF analysis were collected from a beamline 1C of Pohang Light Source (PLS-II) in the Pohang Accelerator Laboratory (PAL).

The anode was erected and fixed perpendicularly to an X-ray incident direction so that an X-ray was incident on the portion of the anode active material layer, and the scattering data including a 2D scattering image was measured with a 0.017 degree step size in a range of 5 to 80 degrees (2θ) using a high energy X-ray (22.003 KeV) having a wavelength (λ) of 0.56356 °.

A 1D scattering intensity data was obtained by integrating the 2D scattering image by a software (Dioptas). In the process of obtaining the 1D scattering intensity data, when the current collector and the composite particles were adhered, a diffraction peak of the current collector was planarized.

A background data was obtained by collecting an X-ray scattered in an atmosphere.

The 1D scattering intensity data, the background data, the used wavelength, and the chemical composition were applied to a software (PDFgetX3) to obtain a structural function S(Q). In the S(Q) acquisition, a background scale with respect to the 1D scattering intensity data of the background data was set to 1.0, and a range of Q was set to 0.1 to 12.0.

The S(Q) was Fourier-transformed to obtain a G(r) function, and a PDF spectrum was obtained by plotting a change of G(r) according to the distance between atoms (r).

After drawing a baseline parallel to the horizontal axis (r) based on the lowest vertical axis (G(r)) height in a range of 0 Å to 6 Å of the PDF spectrum, a center peak value of a peak having a maximum height in a range of 2.0 Å to 2.7 Å was derived as Ip1, a center peak value of a peak having a maximum height in a range of 3.4 Å to 4.1 Å was derived as Ip2, and a center peak value of a peak having a maximum height in a range of 4.1 Å to 4.9 Å was derived as Ip3.

Ip1 and Ip2 were substituted into Equation 1, and Ip2 and Ip3 were substituted into Equation 2, so that the electrode peak intensity ratios were calculated. [Equation 1] $electrode peak intensity ratio \left({I}_{1}\right) = Ip 1 / Ip 2$ [Equation 2] $electrode peak intensity ratio \left({I}_{2}\right) = Ip 2 / Ip 3$

FIG. 4 is a PDF spectrum graph obtained through the PDF analysis of Example 1.

**[Table 3]**

| | first anode active material layer | | second anode active material layer | | I₁ (Ip1/Ip2) | I₂ (Ip2/Ip3) |
|---|---|---|---|---|---|---|
| | active material | content (wt%) | Active material | content (wt%) | | |
| Example 1 | Graphite 1 | 96.3 | Graphite 2 | 82.125 | 0.96 | 1.26 |
| | | | Silicon 1 | 16 | | |
| Example 2 | Graphite 1 | 94.3 | Graphite 2 | 84.125 | 0.79 | 1.19 |
| | Silicon 7 | 2 | Silicon 1 | 14 | | |
| Example 3 | Graphite 1 | 96.3 | Graphite 2 | 88.125 | 1.0 | 1.19 |
| | | | Silicon 1 | 10 | | |
| Example 4 | Graphite 1 | 92.3 | Graphite 2 | 86.125 | 0.71 | 1.0 |
| | Silicon 7 | 4 | Silicon 1 | 12 | | |
| Example 5 | Graphite 1 | 92.3 | Graphite 2 | 82.125 | 0.92 | 1.31 |
| | Silicon 7 | 4 | Silicon 1 | 16 | | |
| Example 6 | Graphite 1 | 96.3 | Graphite 2 | 82.125 | 0.89 | 1.26 |
| | | | Silicon 2 | 16 | | |
| Example 7 | Graphite 1 | 94.3 | Graphite 2 | 84.125 | 0.84 | 1.24 |
| | Silicon 1 | 2 | Silicon 1 | 14 | | |
| Example 8 | Graphite 1 | 88.125 | Graphite 2 | 90.125 | 0.95 | 1.13 |
| | Silicon 1 | 8 | Silicon 1 | 8 | | |
| Example 9 | Graphite 3 | 94.3 | Graphite 2 | 84.125 | 0.97 | 1.26 |
| | Silicone 2 | 2 | Silicon 1 | 14 | | |
| Example 10 | Graphite 4 | 94.3 | Graphite 2 | 84.125 | 0.95 | 1.24 |
| | Silicone 2 | 2 | Silicon 1 | 14 | | |
| Example 11 | Graphite 1 | 96.3 | Graphite 2 | 82.125 | 0.98 | 1.37 |
| | | | Silicon 3 | 16 | | |
| Example 12 | Graphite 1 | 91.125 | Graphite 2 | 93.125 | 0.65 | 1.42 |
| | Silicon 1 | 5 | Silicon 1 | 5 | | |
| Example 13 | Graphite 1 | 92.125 | Graphite 2 | 94.125 | 0.60 | 1.50 |
| | Silicon 1 | 4 | Silicon 1 | 4 | | |
| Example 14 | Graphite 1 | 96.3 | Graphite 2 | 78.125 | 0.98 | 1.16 |
| | | | Silicon 1 | 20 | | |
| Example 15 | Graphite 1 | 96.3 | Graphite 2 | 74.125 | 0.99 | 1.15 |
| | | | Silicon 1 | 24 | | |
| Comparative Example 1 | Graphite 1 | 96.3 | Graphite 2 | 94.125 | 0.41 | 0.99 |
| | | | Silicone 4 | 4 | | |
| Comparative Example 2 | Graphite 1 | 94.3 | Graphite 2 | 84.125 | 0.59 | 1.44 |
| | Silicon 7 | 2 | Silicone 4 | 14 | | |
| Comparative Example 3 | Graphite 1 | 94.3 | Graphite 2 | 84.125 | 0.42 | 1.01 |
| | Silicon 7 | 2 | Silicon 5 | 14 | | |
| Comparative Example 4 | Graphite 1 | 94.3 | Graphite 2 | 84.125 | 1.18 | 1.51 |
| | Silicon 7 | 2 | Silicon 6 | 14 | | |
| Comparative Example 5 | Graphite 1 | 94.3 | Graphite 2 | 83.65 | 1.02 | 1.26 |
| | Silicon 7 | 2 | Silicon 2 | 14 | | |
| Comparative Example 6 | Graphite 1 | 80.125 | Graphite 2 | 98.3 | 0.37 | 0.86 |
| | Silicon 1 | 16 | | | | |

### (5) Orientation index (O.I) analysis of anode active material layers

After charging and discharging each lithium-half cell manufactured according to Examples and Comparative Examples, the lithium-half cell was discharged to 2.2 V. A portion of 20 µm (the second anode active material layer) in a thickness direction from an outer surface was separated from the anode obtained by disassembling the lithium-half cell, and the second anode active material layer was removed using a tape. A XRD analysis was performed on a portion of 20 µm (the first anode active material layer) in a thickness direction from the anode current collector toward the outer surface.

A peak intensity (I(004)) of a peak corresponding to a (004) plane and a peak intensity (I(110)) of a peak corresponding to a (110) plane of each of the first anode active material layer and the second anode active material layer were measured. I(004) is a maximum value of a peak intensity in a range of a diffraction angle (2θ) from 53.5° to 56.0°, and I(110) is a maximum value of a peak intensity in a range of the diffraction angle (2θ) from 76.5° to 78.5°.

The measured I(004) and I(110) were substituted into Equations 3 and 4 to measure an orientation index of each anode active material layer. [Equation 3] $first orientation index \left(O.{I}_{\left(1\right)}\right) = I \left(004\right) / I \left(110\right)$

In Equation 3, I(004) is a peak intensity of the (004) plane peak of the first anode active material layer measured by the X-ray diffraction (XRD) analysis, and I(110) is a peak intensity of the (110) plane peak of the first anode active material layer measured by the XRD analysis. [Equation 4] $second orientation index \left(O.{I}_{\left(2\right)}\right) = I \left(004\right) / I \left(110\right)$

In Equation 4, I(004) is a peak intensity of the (004) plane peak of the second anode active material layer measured by the X-ray diffraction (XRD) analysis, and I(110) is a peak intensity of the (110) plane peak of the second anode active material layer measured by the XRD analysis.

Specific XRD analysis equipment and conditions are shown in Table 4 below, and each orientation index value is shown in Table 5.

**[Table 4]**

| XRD(X-Ray Diffractometer) EMPYREAN | |
|---|---|
| Maker | PANalytical |
| Anode material | Cu |
| K-Alpha1 wavelength | 1.540598 Å |
| Generator voltage | 45 kV |
| Tube current | 40 mA |
| Scan Range | 10~120° |
| Scan Step Size | 0.0065° |
| Divergence slit | 1/4° |
| Antiscatter slit | 1/2° |

**[Table 5]**

| | orientation index first anode active material layer | orientation index second anode active material layer |
|---|---|---|
| Example 1 | 1.57 | 1.85 |
| Example 2 | 1.76 | 1.99 |
| Example 3 | 1.64 | 2.17 |
| Example 4 | 1.81 | 2.35 |
| Example 5 | 1.51 | 1.96 |
| Example 6 | 1.54 | 2.11 |
| Example 7 | 1.52 | 1.67 |
| Example 8 | 2.40 | 2.27 |
| Example 9 | 1.89 | 1.66 |
| Example 10 | 2.13 | 2.13 |
| Example 11 | 1.54 | 1.89 |
| Example 12 | 1.58 | 1.38 |
| Example 13 | 1.56 | 1.35 |
| Example 14 | 1.52 | 2.22 |
| Example 15 | 1.59 | 2.29 |
| Comparative Example 1 | 2.42 | 2.32 |
| Comparative Example 2 | 1.78 | 1.43 |
| Comparative Example 3 | 1.41 | 2.21 |
| Comparative Example 4 | 1.71 | 1.57 |
| Comparative Example 5 | 2.37 | 3.35 |
| Comparative Example 6 | 1.89 | 1.64 |

### Experimental Example

### (1) Measurement of DCIR (Direct Current Internal Resistance)

Charging (CC/CV 0.3C 4.2V 0.05C CUT-OFF) and discharging (CC 0.3C 2.5V CUT-OFF) were performed twice at room temperature (25°C) for the lithium-half cell manufactured according to Examples and Comparative Examples. Thereafter, in a charged state (CC/CV 0.3C 4.2V 0.05C CUT-OFF), a DCIR (mΩ) for 10 seconds at an SOC50% point was measured by discharging (CC 0.3C) to the SOC50% point.

### (2) Measurement of rapid life-span property Measurement

Each lithium secondary battery according to Examples and Comparative Examples was charged (CC/CV, rate 1/3C, SOC80%, cut-off current 0.01C) and discharged (CC, 0.5C, SOC10%, cut-off) at 25°C to measure an initial discharge capacity.

Thereafter, in each secondary battery according to Examples and Comparative Examples, 300 cycles were performed with rapid charging to SOC80% for 20 minutes and discharging to SOC10% as one cycle. A rapid life-span property was evaluated as a percentage of a value obtained by dividing a discharge capacity after the 300 cycles by the initial discharge capacity.

If the discharge capacity decreased below 70% of the initial discharge capacity, the life-span was indicated as a sharp drop.

The evaluation results of the experimental examples are shown in Table 6.

**[Table 6]**

| Classification | DCIR (mΩ) | rapid life-span property (%, 300 cycles) |
|---|---|---|
| Example 1 | 0.91 | 96.4 |
| Example 2 | 0.89 | 96.6 |
| Example 3 | 0.93 | 95.2 |
| Example 4 | 0.94 | 95.8 |
| Example 5 | 0.95 | 95.5 |
| Example 6 | 0.88 | 95.4 |
| Example 7 | 0.86 | 96.8 |
| Example 8 | 0.90 | 95.1 |
| Example 9 | 0.98 | 84.1 |
| Example 10 | 0.97 | 91.7 |
| Example 11 | 0.90 | 97.1 |
| Example 12 | 0.98 | 94.1 |
| Example 13 | 0.99 | 91.7 |
| Example 14 | 0.90 | 89.6 |
| Example 15 | 0.89 | 84.1 |
| Comparative Example 1 | 1.15 | 80.8 |
| Comparative Example 2 | 1.07 | 82.1 |
| Comparative Example 3 | 1.13 | 82.7 |
| Comparative Example 4 | 1.06 | 80.2 |
| Comparative Example 5 | 1.11 | sharp drop (100 cycles) |
| Comparative Example 6 | 1.31 | sharp drop (100 cycles) |

Referring to Table 6, in Examples in which the electrode peak intensity ratio (I₁) according to Equation 1 was in a range from 0.6 to 1.0, the resistance of the lithium secondary battery was generally reduced and the rapid life-span property was improved, compared to those form Comparative Examples.

## Claims

1. An anode for a lithium secondary battery, comprising:
an anode current collector; and
an anode active material layer disposed on at least one surface of the anode current collector and including an anode active material,
wherein an electrode peak intensity ratio (I₁) defined by Equation 1 of the anode active material layer is in a range from 0.6 to 1.0: [Equation 1] $electrode peak intensity ratio \left({I}_{1}\right) = Ip 1 / Ip 2$
wherein, in Equation 1, Ip1 is a maximum height of a peak in a range of 2.0 Å to 2.7 Å in a pair distribution function (PDF) spectrum obtained by a PDF analysis for the anode active material layer, and Ip2 is a maximum height of a peak in a range of 3.4 A to 4.1 A in the PDF spectrum.

2. The anode for a lithium secondary battery of claim 1, wherein an electrode peak intensity ratio (I₂) defined by Equation 2 of the anode active material layer is in a range from 1.0 to 1.5: [Equation 2] $electrode peak intensity ratio \left({I}_{2}\right) = Ip 2 / Ip 3$ wherein, in Equation 2, Ip2 is a maximum height of a peak in a range of 3.4 Å to 4.1 Å in the pair distribution function (PDF) spectrum obtained by the PDF analysis for the anode active material layer, and Ip3 is a maximum height of a peak in a range of 4.1 Å to 4.9 Å in the PDF spectrum.

3. The anode for a lithium secondary battery of any one of claims 1 and 2, wherein the anode active material layer comprises a first anode active material layer and a second anode active material layer on the first anode active material layer.

4. The anode for a lithium secondary battery of claim 3, wherein a first orientation index according to Equation 3 of the first anode active material layer and a second orientation index according to Equation 4 of the second anode active material layer are different from each other: [Equation 3] $first orientation index \left(O.{I}_{\left(1\right)}\right) = I \left(004\right) / I \left(110\right)$ wherein, in Equation 3, I(004) is a peak intensity of a (004) plane peak of the first anode active material layer measured by an X-ray diffraction (XRD) analysis, and I(110) is a peak intensity of a (110) plane of the first anode active material layer measured by the XRD analysis, [Equation 4] $second orientation index \left(O.{I}_{\left(2\right)}\right) = I \left(004\right) / I \left(110\right)$ wherein, in Equation 4, I(004) is a peak intensity of a (004) plane peak of the second anode active material layer measured by the XRD analysis, and I(110) is a peak intensity of a (110) plane peak of the second anode active material layer measured by the XRD analysis.

5. The anode for a lithium secondary battery of claim 4, wherein the first orientation index is smaller than the second orientation index.

6. The anode for a lithium secondary battery of claim 5, wherein the first orientation index is 1.5 or more and 1.8 or less, and the second orientation index is greater than 1.5 and 2.2 or less.

7. The anode for a lithium secondary battery of claim 4, wherein the first orientation index is greater than the second orientation index.

8. The anode for a lithium secondary battery of claim 7, wherein the first orientation index is 1.9 or more and 2.6 or less, and the second orientation index is 1.5 or more and less than 2.5.

9. The anode for a lithium secondary battery of any one of claims 1 and 2, wherein the anode active material layer includes a first anode active material layer including a first carbon-based active material, and a second anode active material layer including a second carbon-based active material and a first silicon-based active material on the first anode active material layer.

10. The anode for a lithium secondary battery of claim 9, wherein the first silicon-based active material includes a carbon-silicon composite.

11. The anode for a lithium secondary battery of any one of claims 9 and 10, wherein a content of the first silicon-based active material is in a range from 5 wt% to 20 wt% based on a total weight of the second anode active material layer.

12. The anode for a lithium secondary battery of any one claims 9 to 11, wherein the first anode active material layer further includes a second silicon-based active material including a silicon oxide.

13. The anode for a lithium secondary battery of claim 12, wherein a content of the second silicon-based active material is in a range from 0.5 wt% to 8 wt% based on a total weight of the first anode active material layer.

14. The anode for a lithium secondary battery of any one of claims 1 to 13, wherein the anode active material includes a composite particle that includes a carbon-based particle including pores and a silicon-containing layer on the carbon-based particle.

15. A lithium secondary battery, comprising:
the anode for a lithium secondary battery according to any one of claims 1 to 14; and
a cathode opposing the anode.
